Europäisches Patentamt

European Patent Office

Office européen des brevets

(19)

(11) Veröffentlichungsnummer: **0 019 012**

**A1**

(12) # EUROPÄISCHE PATENTANMELDUNG

(21) Anmeldenummer: 79104753.3

(22) Anmeldetag: 29.11.79

(51) Int. Cl.³: **H 02 H 5/04**
**H 02 H 7/085, G 01 K 1/14**

(30) Priorität. **18.05.79 DE 2920060**

(43) Veröffentlichungstag der Anmeldung:
**26.11.80 Patentblatt 80/24**

(84) Benannte Vertragsstaaten:
**CH DE FR GB NL SE**

(71) Anmelder. **Felten & Guilleaume Carlswerk**
**Aktiengesellschaft**
**Schanzenstrasse 24 Postfach 80 50 01**
**D-5000 Köln 80(DE)**

(72) Erfinder: **Halt, Horst-Günter, Ing.-Grad.**
**Carl-Zeiss-Weg 5a**
**D-2890 Nordenham(DE)**

(54) **Schutzvorrichtung mit zwei Temperaturüberwachungskreisen für elektrische Maschinen.**

(57) Bei einer Schutzvorrichtung für elektrische Maschinen, insbesondere für läuferkritische Maschinen, wird neben einem aus Temperaturfühlern bestehenden System zur Erfassung der Abschalttemperatur der Ständerwicklung ein zweites Sondensystem (1) am Ständerwickelkopf (8) zum Schutz der Läuferwicklung vorgesehen. Dieses Sondensystem besteht aus Temperaturfühlern, die mit Wärmekollektoren thermisch leitend verbunden sind und die Wärmestrahlung des Läufers messen. Die Temperaturfühler beider Systeme sind hierbei in Reihe geschaltet. Sobald die vorgesehene Grenztemperatur erreicht wird, wird ein Auslösesignal an den Schalter der Maschine erteilt.

FIG. 3

EP 0 019 012 A1

Schutzvorrichtung mit zwei Temperaturüberwachungskreisen
für elektrische Maschinen

---

Die Erfindung betrifft eine Schutzvorrichtung für elektrische Maschinen gemäß dem Oberbegriff des Anspruchs 1.

Die Erfindung geht von einer Schutzvorrichtung aus, die aus Temperaturfühlern besteht, die in der Ständerwicklung der Maschine eingebaut sind. Die Temperaturfühler haben die Aufgabe, eine unzulässige Erwärmung der Maschine rechtzeitig zu erkennen, um eine Abschaltung der Maschine vornehmen zu können. Hierzu werden beispielsweise mehrere Temperaturfühler im Wickelkopf einer Ständerwicklung eingebettet und gemeinsam mit der Wicklung imprägniert und verbacken. Mit Hilfe dieser Anordnung ist allerdings nur der Schutz der Ständerwicklung durch Temperaturüberwachung mittels der Temperaturfühler möglich.

Bei ständerkritischen Motoren, d.h. in Fällen eines zeitlich voreilenden Temperaturanstiegs in der Ständerwicklung gegenüber der Läuferwicklung, ist hierdruch praktisch auch die Maschine bei Überlastung durch Schweranlauf bis zum Stillstand geschützt. Läuferkritische Maschinen, das sind Maschinen, deren Läuferwicklung im Überlastungsfall zuerst eine höhere Temperatur gegenüber der Temperatur der Ständerwicklung annehmen, können nach dieser verhältnismäßig einfachen Anordnung nicht geschützt werden. Hier kommt es
bereits vor Erreichen der für die Temperaturfühler vorgesehenen Abschalttemperaturen im Überlastungsfall, insbesondere im Stillstand = Kurzschlußfall, zu einer Beschädigung der Ständer- und/oder Läuferwicklung.

Aufgabe der Erfindung ist es daher, eine Schutzvorrichtung für elektrische, insbesondere läuferkritische Maschinen zu schaffen, die auf der Basis des Ständerwicklungsschutzes den Läuferwicklungsschutz unter Beachtung einer
wirtschaftlichen Überwachung der Läuferwicklung mit einbezieht und somit einen Motorvollschutz gewährleistet.

Diese Aufgabe wird erfindungsgemäß durch die im kennzeichnenden Teil des Anspruchs 1 angegebenen konstruktiven Maßnahmen gelöst.

Die mit der Erfindung erzielten Vorteile bestehen darin,
daß sich die Temperaturüberwachungseinrichtung in bzw. am
Ständerwicklungskopf befindet und somit äußerst raumsparend in einer elektrischen Maschine unterzubringen ist.
Darüber hinaus ist auch der Aufwand der Schutzeinrichtungen gering, da auf bereits eingesetzte Teile zurückgegriffen werden kann, ein Motorvollschutz also durch Ergänzung
vorhandener Teile erreicht wird.

Vorteilhafte Ausgestaltungen des Gegenstandes des Anspruchs 1 sind den Unteransprüchen zu entnehmen.

So erweist es sich als zweckmäßig, den Wärmekollektor
nicht nur großflächig gegenüber dem Kaltleiterkörper auszuführen, sondern auch dünnwandig zu gestalten, um aufgrund
einer kleinen aufzuheizenden Masse zu möglichst kurzen
Aufheizzeiten des Wärmekollektors und damit auch zu möglichst kurzen Ansprechzeiten des Temperaturfühlers zu gelangen (Ansprüche 2 bis 4). Hierzu trägt auch bei, daß die aus einem Kaltleiterkörper bestehenden Temperaturfühler jeweils in einem Falz eines Wärmekollektors eingebettet sind, wodurch sich ein besonders inniger Kontakt zwischen diesen beiden Teilen ergibt (Anspruch 5).

Ein Ausführungsbeispiel der Erfindung ist in der Zeichnung dargestellt und wird im folgenden näher beschrieben. Es zeigen:

Fig. 1 eine Läufertemperatursonde für elektrische Maschinen in Seitenansicht, im Schnitt

Fig. 2 in Draufsicht

Fig. 3 diese Sonde am Ständerwickelkopf einer elektrischen Maschine, in Seitenansicht.

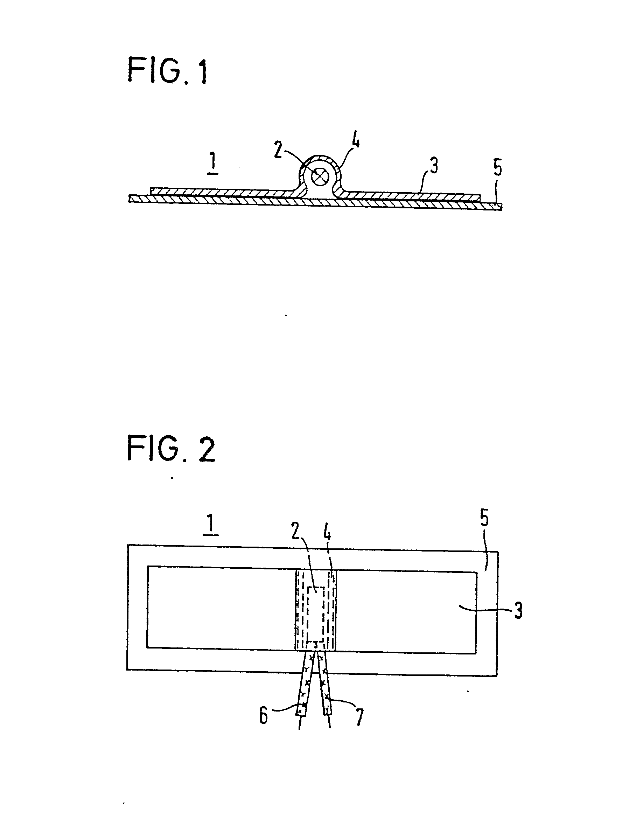

Das Sondensystem zur Überwachung der Läufertemperatur einer elektrischen Maschine besteht aus mehreren Sonden 1, von denen eine in Fig. 1 dargestellt ist. Der zu der Sonde gehörende Temperaturfühler besteht aus einem Kaltleiter, dessen Körper 2 in unmittelbarer Nähe eines Wärmekollektors 3 angeordnet ist. Um eine möglichst innige Verbindung zwischen dem Kaltleiterkörper 2 und dem Wärmekollektor 3 zu erreichen, ist der Wärmekollektor mit einem Falz 4 versehen, in dem der Kaltleiterkörper 2 eingebettet ist. Diese Einbettung kann man noch verbessern, indem man den Kaltleiterkörper 2 mit dem Wärmekollektor 3 verklebt. Die falzoffene Fläche des Wärmekollektors 3 ist mit einer isolierenden Platte 5 verbunden, damit diese dem Ständerwickelkopf anliegende Seite der Sonde eine ausreichende Isolierung gegen die an sich isolierten Drähte der Ständerwicklung bietet.

Der Fig. 2 ist zusätzlich zu entnehmen, daß der Kaltleiter zwei Anschlüsse 6 und 7 besitzt, die isoliert herausgeführt sind.

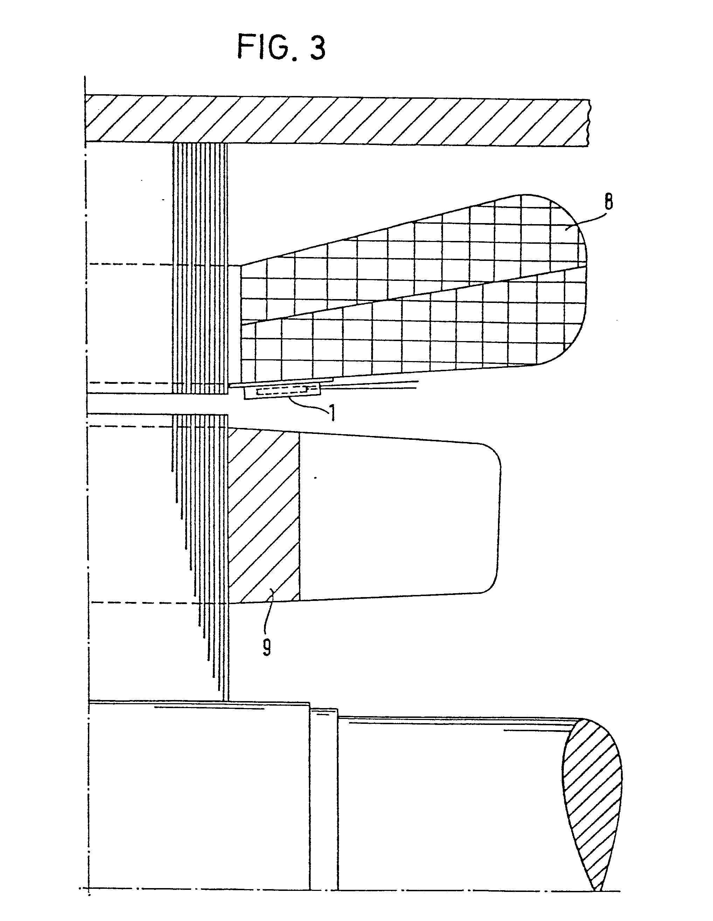

Die Fig. 3 zeigt den Einsatz einer Läufertemperatursonde
in einer elektrischen Maschine mit einem Käfigläufer. Die
Sonde 1 ist hierbei an einer Stelle des Ständerwickelkopfes 8 angebracht, die dem Kurzschlußring 9 des Käfigläufers am nächsten liegt. Der Abstand der Sonde 1 zum Kurzschlußring entspricht dabei der kleineren Seitenlänge des
Wärmekollektors.

Alle Temperaturfühler der Läufertemperatursonden, die
elektrisch isoliert und fest verbunden mit dem Ständerwickelkopf in etwa gleichmäßigem Abständen angeordnet
sind, werden in Reihe geschaltet, ebenso wie die Temperaturfühler im Wickelkopf der Ständer wicklung. Die Reihenschaltung erfolgt auch für beide Temperaturüberwachungskreise, wobei im übrigen die Reihenfolge der Hintereinanderschaltung frei gewählt werden darf. Im Fall einer
läuferkritischen Maschine wird beispielsweise während
eines erschwerten Hochlaufens in der Läuferwicklung eine
höhere Temperatur als in der Ständerwicklung während der
gleichen Zeit erzeugt, die in erster Linie durch Strahlung
die dem Läufer benachbarten Teile zusätzlich erwärmt. Ein
Teil der abgestrahlten Wärme wird von den Wärmekollektoren aufgenommen und an die hierin eingebetteten Temperaturfühler übertragen, die ihrerseits bei Erreichen der
vorgesehenen Grenztemperatur das Auslösesignal an einen
Schalter der Maschine erteilen.

Fl 4511 1 15.05.79

Ansprüche:

1. Schutzvorrichtung für elektrische Maschinen, insbesondere für läuferkritische Maschinen, mit folgenden
   Merkmalen:
   a) einem aus Temperaturfühlern bestehenden System zur
      Erfassung der Abschalttemperatur der Ständerwicklung
      der Maschine und
   b) einer Vorrichtung zum Abschalten der Maschine,
   d a d u r c h   g e k e n n z e i c h n e t,   daß
   c) ein Sondensystem mit Temperaturfühlern vorgesehen
      ist, die mit Wärmekollektoren (3) thermisch leitend
      verbunden sind
   d) die Sonden (1) des Systems an der Innenseite des
      Ständerwickelkopfes (8) gegenüberliegend und in un-
      mittelbarer Nähe des korrespondierenden Läufer-
      wickelkopfes angeordnet sind
   e) die Temperaturfühler beider Systeme jeweils in Reihe
      oder getrennt geschaltet sind und
   f) mit einer als Auslösegerät ausgebildeten Vorrichtung
      zum Abschalten der Maschine verbunden sind.

2. Schutzvorrichtung nach Anspruch 1,   d a d u r c h
   g e k e n n z e i c h n e t,   daß die Temperaturfühler
   des Sondensystems aus einem Kaltleiter bestehen, dessen
   Körper (2) kontaktierend mit einem im Verhältnis zum Kaltleiterkörper großflächigen Wärmekollektor (3) aus
gut wärmeleitendem Material, z.B. Kupfer, verbunden
ist.

3. Schutzvorrichtung nach einem der Ansprüche 1 oder 2,
   d a d u r c h   g e k e n n z e i c h n e t, daß der
   Wärmekollektor (3) eine Oberfläche aufweist, die mindestens dem 5-fachen Betrag der Oberfläche des Kaltleiterkörpers (2) entspricht.

4. Schutzvorrichtung nach einem der Ansprüche 1 bis 3,
   d a d u r c h   g e k e n n z e i c h n e t, daß der
   Wärmekollektor (3) eine Wandstärke von kleiner als
   0,2 mm aufweist.

5. Schutzvorrichtung nach einem der Ansprüche 1 bis 4,
   d a d u r c h   g e k e n n z e i c h n e t, daß der
   Kaltleiterkörper (2) in einem Falz (4) des Wärmekollektors (3) eingebettet ist und die Anschlußenden (6, 7)
   des Kaltleiterkörpers isoliert aus dem Falz herausgeführt sind.

6. Schutzvorrichtung nach einem der Ansprüche 1 bis 5,
   d a d u r c h   g e k e n n z e i c h n e t, daß der
   Wärmekollektor (3) mit seiner falzoffenen Fläche mit
   einer isolierenden Platte (5) verbunden ist.

7. Schutzvorrichtung nach einem der Ansprüche 1 bis 6,
   d a d u r c h   g e k e n n z e i c h n e t, daß die
   Sonden (1) mit ihren isolierenden Platten (5) in regelmäßigen Abständen am Ständerwickelkopf (8) befestigt
   sind.

8. Schutzvorrichtung für Maschinen mit Käfigläufer nach
   einem der Ansprüche 1 bis 7, d a d u r c h  g e -
   k e n n z e i c h n e t, daß das Sondensystem am
   Ständerwickelkopf (8) gegenüber einem den Käfig begrenzenden Kurzschlußring (9) befestigt ist, wobei
   der Abstand des Wärmekollektors (3) vom Kurzschlußring
   etwa der Länge der kleineren Seite des Wärmekollektors
   entspricht.

FIG. 1

FIG. 2

## FIG. 3

Europäisches
Patentamt

Nummer der Anmeldung

EP 79 10 4753.3

# EUROPÄISCHER RECHERCHENBERICHT

| | EINSCHLÄGIGE DOKUMENTE | | |
|---|---|---|---|
| Kategorie | Kennzeichnung des Dokuments mit Angabe soweit erforderlich der maßgeblichen Teile | betrifft Anspruch | |
| X | DE - A1 - 2 537 950 (UNELEC)<br>* ganzes Dokument *<br>-- | 1,7 | |
| X | CH - A5 - 559 905 (HONEYWELL LTD.)<br>* ganzes Dokument *<br>---- | 2-6 | |

**KLASSIFIKATION DER ANMELDUNG (Int Cl.3)**

H 02 H 5/04
H 02 H 7/085
G 01 K 1/14

**RECHERCHIERTE SACHGEBIETE (Int. Cl.3)**

G 01 K 1/14
H 02 H 5/04
H 02 H 7/085

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 06-08-1980 | LEMMERICH |

EPA form 1503.1  06.78